# EUROPEAN PATENT SPECIFICATION

(11) **EP 4 459 145 B1**
(45) Date of publication and mention of the grant of the patent: **04.02.2026**
(21) Application number: 23171750.5
(22) Date of filing: 05.05.2023
(51) Int. Cl.: F16C 19/38, F03D 13/20, F03D 80/50, F03D 80/70, F16C 33/46, F16C 33/58, F16C 33/78, F16C 43/06

(54) **METHOD FOR REPAIRING A ROLLER MAIN BEARING OF A WIND TURBINE**
VERFAHREN ZUR REPARATUR EINES WÄLZHAUPTLAGERS EINER WINDENERGIEANLAGE
PROCÉDÉ DE RÉPARATION D'UN PALIER PRINCIPAL DE ROULEMENT D'UNE ÉOLIENNE

(43) Date of publication of application: 06.11.2024
(73) Proprietor: Siemens Gamesa Renewable Energy A/S, 7330 Brande (DK)
(72) Inventor: Bose, Debottam, 7100 Vejle (DK); Frandsen, Rasmus Berg, 8870 Langå (DK); Frydendal, Niels Karl, 7400 Herning (DK); Hoejgaard, Mathias Muff, 6710 Esbjerg V (DK); Mortensen, Henrik Gyldenlev, 7480 Vildbjerg (DK); Møller, Troels Kildemoes, 7400 Herning (DK); Pedersen, Karl Martin, 8723 Loesning (DK); Poulsen, Søren, 7500 Holstebro (DK); Thomsen, Kim, 9520 Skørping (DK); Thorhauge, Morten, 8680 Ry (DK); Vinther, Soeren, 7400 Herning (DK)
(74) Representative: SGRE-Association

(56) References cited:
- EP-A1- 2 360 383
- EP-A1- 3 967 905
- DE-A1- 102010 054 948
- DE-A1- 102017 008 877

## Description

Method for repairing a roller main bearing of a wind turbine The invention refers to a method for repairing roller main bearing of a wind turbine.

A wind turbine, either an onshore or an offshore wind turbine, usually comprises hub with several turbine blades mounted at the hub. The hub is connected to a nacelle via a main bearing comprising an inner ring and an outer ring, which rings are arranged concentrical. The inner ring usually has a U-shaped cross-section, comprising two radial outward facing shoulders and the central ring part, which comprises two inner raceways arranged in the V-arrangement. The outer ring has a corresponding shaped and engages in the inner ring. At the central part of the outer ring two corresponding raceways are arranged also in a V-arrangement. Rollers usually having a conical shape are arranged in the space between the inner and the outer rings and role on the respective raceways. The hub is connected to the outer ring, so that, when the hub rotates, also the outer ring rotates. The outer ring is connected to a rotor of a generator, which is driven when the hub rotates. The setup of such a wind turbine is commonly known.

Roller main bearings of wind turbines are known from DE 10 2017 008877 A1, DE 10 2010 054948 A1 or EP 2 360 383 A1. DE 10 2017 008877 A1 refers to a specific design of a roller bearing in which either the inner ring or the outer ring comprises openings to insert the rollers and improve the assembly or repair of the bearing according to the preamble of the method claims 1, 5 and 6. The openings can be closed by means of plugs. DE 10 2010 054948 A1 discloses a sealed bearing with an inner ring and an outer ring, the inner ring comprising two discs to fixate the rollers in axial direction and to fixate at least a part of the seals. EP 2 360 383 A1 discloses a bearing with an inner ring, an outer ring and a floating inner rib. The rib is formed as a ring and serves as a fixating means for applying an axial preload on the rollers.

The main bearing has a very large dimension having a cross-section of several meters, for example of 4 m. It needs to carry the whole weight of the hub and the turbine blades and needs to guarantee a perfect rotation and transfer of the rotation to the generator. Nevertheless, the bearing, especially the rollers, are subjected to wear during their lifetime. This may result in cracks, especially axial cracks, in the rollers, which may considerably damage the bearing and greatly affect the lifetime of the bearing. When any such damages are discovered during an inspection, the whole bearing is exchanged as a single piece, which is very costly and results in a turbine being switched off the grid for a long time.

It is an object of the invention to provide an improved method for repairing a roller main bearing of a wind turbine.

For addressing this object the invention proposes alternative methods for repairing a roller main bearing of a wind turbine according to claims 1, 5 and 6, wherein the bearing comprises an inner ring having a U-shaped cross section, which inner ring comprises two radial outward facing shoulders and two inner raceways in a V-arrangement, an outer ring arranged concentrical with the inner ring and engaging in the inner ring, which outer ring comprises two outer raceways in a V-arrangement, and several rollers arranged in a space between the inner and the outer ring rolling on the respective raceways, comprising the steps:
- opening an aperture providing access into the space between both rings in which area the rollers are arranged,
- removing a roller through the aperture,
- closing the aperture again.

The invention allows for a smart on-site repair of the main bearing without the need for changing the whole bearing. According to the invention the bearing is opened by creating an aperture, which may be provided only locally, so that an aperture is realized, which allows for an excess into the space of the bearing where the rollers are arranged. Through this aperture or opening the respective roller, which is damaged, is removed and taken out of the space between the rings. Afterwards the aperture is closed again, so that the bearing is closed and sealed again. The inventive method therefore allows for an in situ repair of the bearing, as the bearing is, preferably only locally, opened to gain access for the removal of the damaged roller, which opening is closed again afterwards. No dismantling is necessary, especially the hub remains in place. The downtime therefore is short, compared to a complete change of the main bearing.

Usually, a seal carrier ring arrangement is provided, which closes the space comprising the rollers in the radial direction. This seal carrier ring arrangement tightly seals the inner space of the bearing so that this space is not contaminated. Usually, this seal carrier ring arrangement comprises is a single ring, but it may also comprise a number of separate ring arrangement parts, which are fixated to one of the rings and seals to the other ring. According to the first alternative of the invention, this seal carrier ring arrangement is removed in case it is a single ring providing a larger ring-type opening or is locally opened in case it comprises several parts, for providing an opening which is at least a part of the aperture. The arrangement is opened by simply removing the whole ring or one of the ring arrangement parts, so that the opening provides an excess into the inner space of the bearing. This opening may either be the final aperture, which will be described later, or is a part of the aperture.

According to the first alternative of the invention, where the opening is provided by removing the seal carrier ring arrangement or where the opening in the seal carrier ring arrangement is only a part of the aperture, a part of the shoulder of the inner ring is cut away for building an opening in the ring, which opening together with the opening in the seal carrier ring arrangement is the aperture. According to this alternative, the inner ring is locally cut open at its shoulder. A part of the shoulder is removed, so that the inner ring is opened and the inner space can be accessed through this opening. The position of this ring opening corresponds to the position of the opening in the seal carrier ring arrangement in case it comprises several parts, so that both openings complement each other and build the final aperture. The size of the aperture is preferably such that the whole roller may be moved through this aperture.

Usually, the rollers are arranged in a massive cage, which cage comprises separate pockets. In each pocket a separate roller is arranged. If such a cage is provided, this cage can also be locally cut open for providing an opening to the pocket comprising the roller which shall be removed.

As mentioned, the respective raceways are arranged in a V-arrangement. This result is also in a V-arrangement of the two roller rows. The aperture is arranged in the extension of the longitudinal axis of a roller. The cage pocket is closed radially, so that the part of the cage which is cut away is also in the extension of the longitudinal axis. This arrangement allows for pulling the roller out of the cage respectively the inner space along its longitudinal axis.

In this first alternative, as mentioned, the whole roller is removed through the aperture. It is possible to insert a new roller into the pocket, so that the row of rollers is completed again. In an alternative it is possible to leave the pocket empty, so that the number of rollers is reduced. This is possible, as the bearing is still able to take all loads even if one or some rollers are missing.

After removing the roller or after inserting the new roller, the cage, if cut, is closed by inserting and fixating an adapted cage piece into the cage opening. Further, the shoulder of the ring is also closed by inserting and adapted shoulder piece into the shoulder opening. If in this first alternative either the shoulder of the ring is cut or, additionally, also the cage is cut, both respective cuttings are closed again. For closing the cage, if cut, an adapted cage piece, the shape of which corresponds to the shape of the cage section which is cut out, is inserted and fixated to the cage, so that the respective pocket, either empty or filled with a new roller, is closed again. For closing the shoulder also as separate shoulder piece, the shape of which corresponds to the shape of the shoulder section which is cut out, is inserted and fixated to the inner ring, so that also the ring is closed again. As such cage or shoulder pieces those pieces, which were previously cut out of the cage respectively the shoulder may be used, as they certainly fit in the respective recess. The fixation may be done by any appropriate fixation operation, for example using separate bolts for bolting the cage piece or the shoulder piece to the cage respectively the inner ring. Also, a welding operation may be performed.

For cutting the shoulder and, if necessary, the cage, an appropriate cutting means or cutting tool is used. This may be any sawing or grinding tool or the like, or any kind of spark erosion machinery.

As mentioned, this first alternative may either allow for the replacement of the damaged roller by inserting a new roller, or may leave their respective pocket empty. When leaving the pocket empty, it is possible to not only remove one roller out of the roller row, but several rollers, for example up to 5 or 6 rollers, without having a negative influence on the load carrying properties of the bearing.

According to the second alternative of the invention, the damaged roller is cut into pieces by means of a cutting tool inserted into the space comprising the rollers through the opening built by removing the seal carrier ring arrangement or a part of the seal carrier ring arrangement, which cut pieces are removed from the space through the opening in the seal carrier ring arrangement. In this alternative, the aperture is only realized by the removed complete seal carrier ring arrangement or ring arrangement part, which removal opens the ring arrangement for providing access into the inner space. This opening in the ring arrangement is not large enough to take out the whole roller. This is not necessary, as, according to the second alternative, the damaged roller is cut into pieces and is taken out piece by piece. The cage is not cut, as this is not necessary in this alternative In this alternative the respective pocket is left empty, after all pieces are taken out, as it is not possible to insert a new roller through the small opening in the seal carrier ring arrangement. After the last piece is taken out, it is only necessary to close the seal carrier ring arrangement by replacing the ring arrangement part, so that the ring arrangement is completely closed again.

For cutting the roller into pieces any appropriate sawing or grinding tool may be used, which is adapted to be moved through the opening or aperture in the seal carrier ring arrangement.

For avoiding that any sawing or grinding dust or particulates remain in the space, which dust or particulates may negatively influence the lifetime of the bearing, it is advantageous to fill the space around the damaged roller with the protection material, which material is removed after the removal of the last roller piece. This protection material may for example be a foam material, which is sprayed in this area and which foams and enlarges its volume, thereby sealing the working zone at the damaged roller from the rest of the space between the rings. The protection material respectively the foam material may be removed for example by heating or by using any appropriate chemicals or the like, which operation will destroy this material. It is certainly also possible to take the material out of the space bit by bit, wherein some material left in the space has no influence on the bearing properties, as it is a very soft material.

In the first and the second alternatives, the aperture is arranged at a radially outward position, as either only the seal carrier ring arrangement is locally opened, or additionally also the shoulder is locally cut away. The pieces of the roller, after cutting, are taken out of the space through this radially outward opening, the same holds true when the whole roller is taken out of the space.

According to a third alternative, the inner ring is cut open for providing the local aperture only in the ring, which aperture opens the shoulder and the inner raceway, and is positioned relative to the roller and is that mentioned such that they roller can be moved through the aperture. In this alternative the seat carrier ring arrangement needs not necessarily be removed or opened locally, although it can be. In any case the inner ring is locally cut open by cutting out a ring part comprising a part of the inner raceway. The shoulder is not necessarily cut away but may be. This large aperture there-fore opens perpendicular to the longitudinal axis of the roller. This allows for the roller to fall out of the pocket through the aperture, when the aperture is below the roller, or for the roller to be lifted through the aperture, when the aperture is located above the roller. The aperture is certainly dimensioned such that the whole roller can be completely move through this opening, either by falling due to its weight or by lifting, depending on where the aperture is positioned. The aperture can be positioned at the 12 o'clock position, i.e. the down-wind side, where the roller can fall out of his pocket, or at the 6 o'clock position at the upwind side, where the roller needs to be lifted.

For cutting the inner ring any appropriate cutting tool may be used. Preferably a spark erosion machinery is used.

As according to this alternative, the aperture is large enough, it is possible to insert a new roller after the damaged roller is taken out of the pocket respectively the space. Therefore, in this third alternative the number of rollers in the respective roller row is maintained.

This third alternative allows for a complete exchange of all rollers of the respective roller row. To perform such a complete exchange, the outer ring is rotated stepwise so that one roller after the other is rotated to the aperture and is replaced by new roller. When rotating the outer ring, which rotation is controlled by a respective control device, so that they outer ring is slowly moved and can exactly be positioned, also the rollers move along the respective raceways. The circumferential movement of the rollers is half of the circumferential movement of the outer ring. Nevertheless, by rotating the outer ring it is possible to move one roller after the other to the respective aperture provided at the inner ring, so that one roller after the other may be moved out of the space and may be replaced by a new roller. This allows for a complete exchange of all rollers of a roller row, thereby enhancing the lifetime of the main bearing remarkably.

Each roller is preferably moved out of and into the pocket by means of a lifting tool. Such a lifting tool may for example be hydraulic lifting tool, which lifts or lowers the damaged roller respectively the new roller.

Preferably, the aperture is provided at 12 o'clock position or at a 6 o'clock position, seen in the circumferential direction, for accessing the space of the rollers. The chosen position depends on which of the two roller rows shall be replaced. The first roller row is closer to the hub, the second roller row is at the other side and is closer to the generator. As mentioned, the hub with the turbine blades is fixated to the outer ring, which receives the whole load and transfers it to the inner ring, which is fixated to the nacelle. This results in a tilting moment, which rests on the main bearing. When the first roller row which is close to the hub shall be changed, which roller row is at the upwind side, the aperture is cut at the 6 o'clock position, as in this position the respective roller is less loaded due to the tilting moment. In this unloaded condition the removal of the roller is easier. If, on the other hand, the rollers of the second roller row, which is arranged at the downwind side, shall be replaced, the aperture is arranged at the 12 o'clock position. For unloading the rollers, which are under a certain load, for removing them any external hydraulic tool like a hydraulic cylinder connected to the outer ring may be used.

Also in this third alternative the opening is closed after the last roller is replaced. The aperture is closed by inserting and adapted ring piece which comprises a raceway part completing the inner raceway. As mentioned, the aperture also extends into the raceway of the inner ring, which is therefore interrupted. The adapted ring piece provides their respective raceway part for completing the inner raceway.

Preferably the raceway part provided by the adapted ring piece comprises means for taking the roller, which rolls over the raceway part, out of the load path. As mentioned, in this third alternative a part of the inner raceway, on which raceway the respective load transferred by the rollers rests, is cut away, the hole is cut under the shoulder of the ring. The shoulder may remain, but if need be it can also be cut away. When inserting the adapted ring piece with the raceway part, the raceway is closed. Nevertheless, the stiffness of the raceway respectively the inner ring at this specific position is slightly reduced, compared to the rest of the inner ring. It is there-fore advantageous, when the ring piece is not subjected to the full load, as the rest of the inner ring is, but to only some reduced load. To realize this, the raceway part provided by the adapted ring piece comprises means for taking the respective roller out of the load path. This guarantees, that not the full load rests on the ring piece, but only the weight load of the roller, which is not in contact with the outer raceway and is therefore not loaded.

The means provided at the raceway part may for example be a ramp or chamfer geometry, which guides the roller slightly away from its contact to the outer ring raceway. This ramp or chamfer geometry therefore guides the roller radially for some millimeters or maybe a centimeter, so that it loses its contact to the outer ring raceway, thereby being unloaded. In an alternative the raceway part may show some internal elasticity which allows the roller to slightly unload respectively move radially out of its contact to the outer ring. This internal elasticity may for example be realized by using a ring piece made of a somehow softer metal or alloy like brass. It is also possible to use a ring piece made of steel which is equipped with a kind of support area comprising the raceway part, which support area is made of the softer metal or alloy like brass. In an alternative to using a support area made of the softer metal or alloy it is feasible to provide such support area made of an elastic polymer or on a polymer basis.

Also, this third alternative allows for an in situ respectively on-site repair of the main bearing of the wind turbine without any need for dismantling the hub etc.

Whenever any cutting or grinding operation of the shoulder, the ring or the cage is performed, it is preferred to seal the inner space of the bearing by inserting any appropriate sealing material. So, the space in the vicinity of an area, where a cutting process is performed either at the shoulder or the inner ring or the cage or a damaged roller, is filled with a protection material, which material is removed after the cutting process. By sealing the space no sawing or grinding particles can get into the space. These particles are made of a very hard steel material, so that they can damage the rollers and/or the raceways during operation, which may reduce the lifetime of the bearing.

Other objects and features of the present invention will become apparent from the following detailed description considered in conjunction with the accompanying drawings. The drawings, however, are only principle sketches designed solely for the purpose of illustration and do not limit the invention. The drawings show:
- fig. 1: a cut view of the main bearing of a wind turbine,
- fig. 2: the bearing of fig. 1, adapted to perform the method according to a first embodiment after removing a part of the seal carrier ring arrangement and cutting a part of the shoulder of the inner ring,
- fig. 3: the bearing of fig. 1, adapted to perform the method according to a second embodiment after removing a part of the seal carrier ring arrangement for inserting a cutting tool for cutting the roller into pieces,
- fig. 4: a perspective cut view of the main bearing with an aperture in the inner ring at the downwind side at the 12 o'clock position,
- fig. 5: the mounted bearing seen from the downwind side showing the aperture,
- fig. 6: a perspective cut view of the main bearing with an aperture in the inner ring at the upwind side at the 6 o'clock position, and
- fig. 7: a principal illustration of the unloading of the rollers at the inserted ring piece.

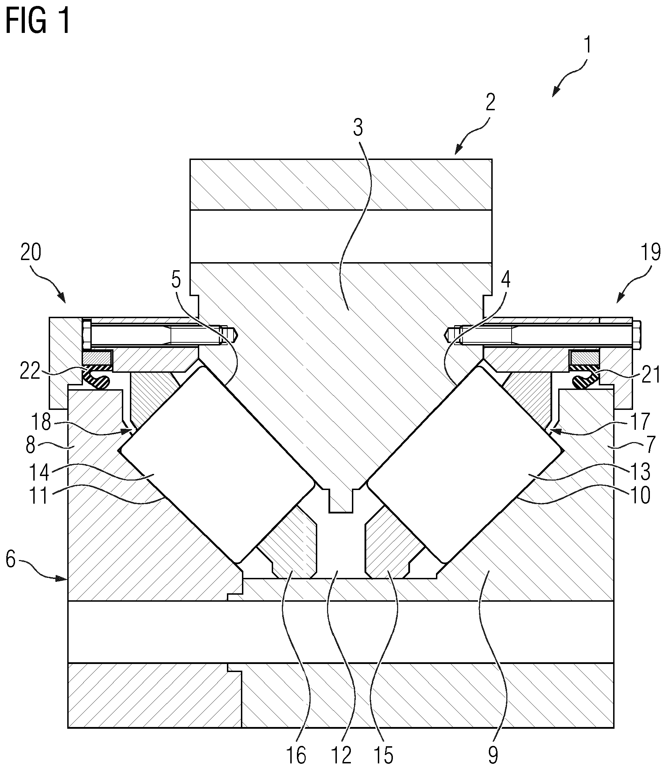

Fig. 1 shows a principal cut view of main bearing 1 of a wind turbine. The main bearing 1 comprises an outer ring 2, to which a hub comprising the turbine blades and the rotor of a generator is connected in a commonly known way. The outer ring 2 has a central ring base 3 comprising two outer raceways 4, 5 which are arranged in the V-arrangement.

The main bearing 1 further comprises and inner ring 6 having a kind of U-shaped cross-section, comprising two axial shoulders 7, 8 extending radially and a ring base 9 having a groove like shape and comprising two inner raceways 10, 11 also in a V-arrangement, corresponding to the V-arrangement of the outer raceways 4.

Between the rings 2, 6 a space 12 is provided, in which respective rollers 13, 14 are arranged in separate rows. Corresponding to the V-arrangement of the raceways 4, 5 and 10, 11 also the rollers 13, 14 are arranged in a V-arrangement and role on the respective raceways 4, 5, 10, 11. The rollers 13, 14 are arranged in respective cages 15, 16, which both comprises respective pockets 17, 18. Each pocket 17, 18 comprises one roller 13, 14.

The figure additionally shows two seal carrier ring arrangements 19, 20, which are in this embodiment fixated to the outer ring 2 and seal with a sealing means 21, 22 to the respective shoulders 7, 8 of the inner ring 6.

Fig. 1 shows the circular main bearing 1 in the 12 o'clock position.

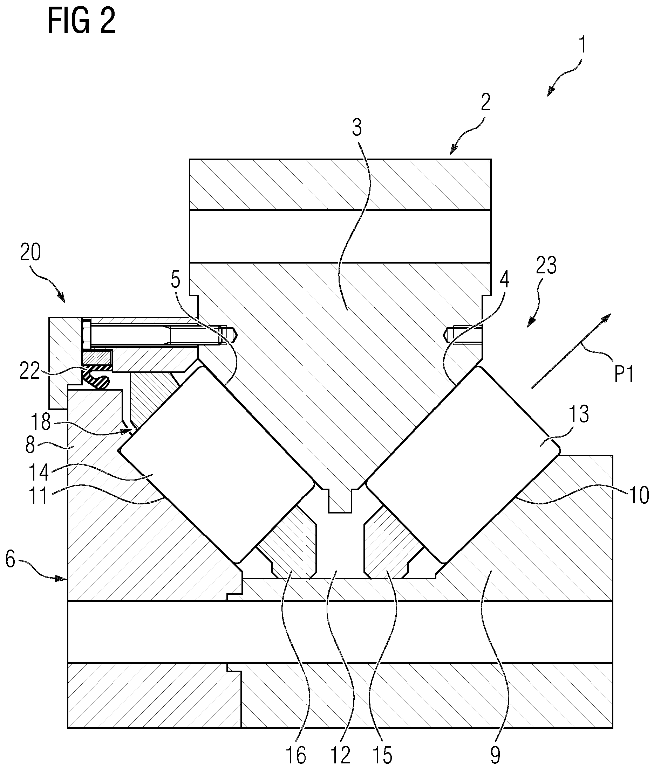

Fig. 2 shows the main bearing 1 according to fig. 1, which main bearing 1 is worked in order to remove a damaged roller 13 and replace it by a new roller. For this repair operation either the whole seal carrier ring arrangement 19 or a part of the seal carrier ring arrangement 19 is removed, so that the space 12 between both rings 2, 6 is completely or locally opened and can be accessed. Additionally, as fig. 2 shows, a part of the shoulder 7 is locally removed by cutting the part away. Further, also the cage 15 is partly cut, so that the pocket 17 is radially opened at its outside. Both openings, which are provided in the seal carrier ring arrangement 19 and at the shoulders 7, complement each other and build an aperture 23, which is open to the outside and is sufficiently dimensioned in view of the size of the roller 13.

As fig. 2 shows, the respective damaged roller 13 can now be taken out of the pocket 17 through the aperture 23, as shown by the arrow P1. When the roller 13 is removed, a new roller can be inserted through the aperture 23 into the pocket 17.

After inserting the new roller 13, the cage 15 is locally repaired by fixating a cage piece to the cage 15, which cage piece closes the pocket 15 again, thereby securing the new roller 13. The cage piece may be fixated by welding.

Afterwards also the shoulder 17 is repaired by inserting an adapted shoulder piece into the opening in the shoulders 7, thereby closing the shoulder 7 again. The shoulder piece is fixated also by welding or by means of external brackets and bolts or the like.

Now finally also the seal carrier ring arrangement 17 is closed again by inserting the previously removed seal carrier ring part. The main bearing 1 one is now completed again.

It is possible to not only remove one roller 13 through the aperture 23, but also further rollers 13 in case they are damaged. For this operation, after replacing the first roller 13 with a new roller, only the cage 15 is locally repaired respectively closed by fixating the caged piece, so that the new roller 13 is secured. The aperture 23 is still open. Now the outer ring rotates under control of a control device, so that another damaged roller 13 is moved to the aperture 23. For replacing this damaged roller 13, the cage 15 is again locally opened by cutting away the outer cage part, whereupon the roller 13 is removed and replaced by a new roller. The cage is again closed by inserting and welding respective cage piece. If necessary, another roller may be replaced as described, until all rollers are replaced. Now the aperture 23 is closed as previously described.

As a cage piece respectively a shoulder piece, the respective cut-outs may be used, i.e. the cage piece which is cut out for opening the pocket 15, or the shoulder piece which is cut out for opening the shoulder 7. These pieces already have a comparable shape respectively size, so that they can be appropriately refitted again.

Arranging the aperture 23 at the 12 o'clock position when replacing rollers 13 at the downstream side is advantageous, as in this position the respective roller 13 is unloaded. If a roller 14, which is arranged in the row at the other upstream side of the main bearing 1, shall be replaced, the aperture 23 is provided at the 6 o'clock position, as these rollers are unloaded in the 6 o'clock position.

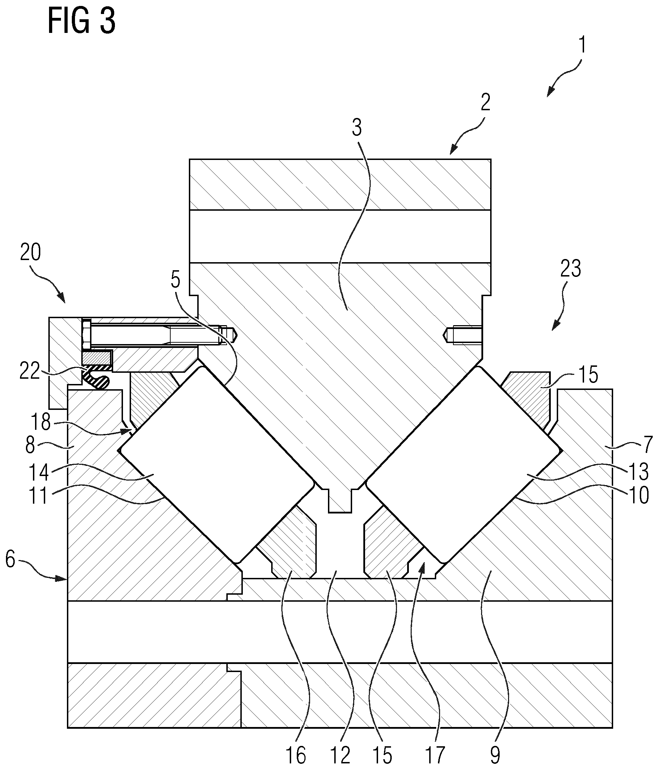

Figure 3 shows a principal illustration for explaining a second embodiment of the inventive method. Again, the seal carrier ring arrangement 19 is locally opened by removing a seal carrier ring part, so that the aperture 23 is provided, which gives access to the space 12. In this second embodiment, the shoulder 7 is not cut, it remains unworked. The same holds true for the cage 15, which is also unworked. In this embodiment, after opening the seal carrier ring arrangement 19, a protection material is arranged in the space 12, which protects the space around the damaged roller 13 in order to avoid that any sawing or grinding particles will contaminate the space 12. This protection material may for example be a foam material, which is arranged in the space 12.

After protecting the surrounding of the damaged roller 13, a sawing or grinding tool is used for cutting the roller 13 into pieces. The tool is inserted through the aperture 23. The cut pieces of the roller 13 are now removed piece by piece through the aperture 23, until all pieces are removed and the pocket 17 is empty. In this embodiment, no new roller may be replaced, as the pocket 17 has never been opened, and as the aperture 23 is too small for inserting a new roller 13.

After all pieces are removed, the protection material is removed from the space 12, as far as possible. When a foamed material or any other comparable soft material is used, parts of this material may remain within the main bearing 1, as this is a very soft material, which does not affect the rolling action respectively the raceways of the rollers.

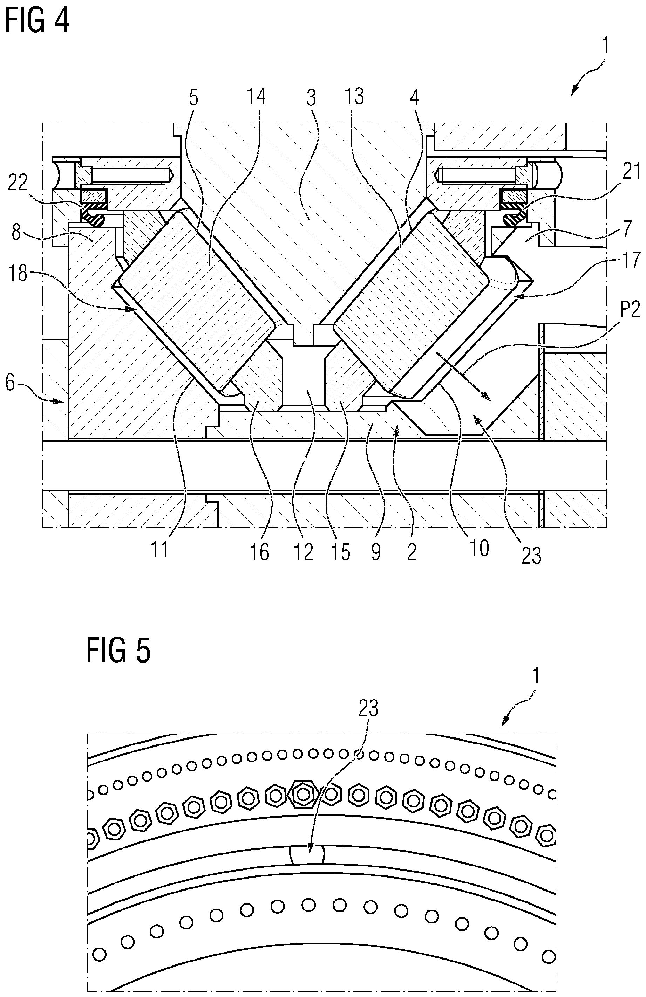

Fig. 4 shows a perspective view of the main bearing 1 installed at the wind turbine. This illustration shows a third embodiment for allowing a in situ respectively on-site repair of the main bearing 1.

Here, the aperture 23 is realized by cutting a respective hole in the inner ring 6 itself. The hole extends from the shoulder 7 to the base 9, so that not only a part of the shoulder 7 is removed, but also a part of the raceway 10, as the fig. 4 clearly shows. The realized aperture 23 has therefore a length and a width, which is slightly larger than the length and the width of the roller 13, which shall be removed respectively replaced.

When the aperture 23 is provided, the roller 13 can now fall out of his pocket 17 and through the aperture 23 to the outside as shown by the arrow P2. This operation may be supported by using a kind of lifting tool or the like for moving the roller 13. When the damaged roller 13 is taken out of the pocket 17, a new roller 17 may be inserted in the pocket 17 through the aperture 23, again for example by using the respective lifting tool.

This aperture 23 is arranged at the 12 o'clock position, when rollers 13, which are arranged at the downside of the wind turbine, shall be replaced. Fig. 5 shows an illustration with a particular view of the main bearing 1. The figure shows the aperture 23, which is remarkably small compared to the dimension of the main bearing 1, which might have a diameter of several meters, for example four meters.

Before starting the cutting operation, which cutting may be performed by using any appropriate cutting tool like a spark erosion tool or the like, also in this embodiment the seal carrier ring arrangement 19 is locally opened at the 12 o'clock position to get access into the space 12. The space 12 may again be locally filled with the respective protection material like a foam or a silicone material or the like, which somehow seals the area where the cutting operation will now be performed in order to avoid any particles resulting from the cutting operation falling in the space 12. The particles preferably stick to the protection material. After the sawing or grinding process the protection material is removed again.

This embodiment allows for an on-site replacement of all rollers 13 of the respective roller row. To realize this complete replacement, one roller after the other is taken out and replaced by a new roller 13. This stepwise replacement is performed such, that, after inserting a new roller 13, the outer ring 2 is rotated for a short distance in order to bring the next roller 13, which is arranged adjacent to the previously inserted new roller 13, to the aperture 23, so that this second roller may now be taken out of his pocket 17 through the aperture 23. A new roller 13 is inserted in the pocket through the aperture 23, whereafter the outer ring 2 is again rotated for short distance, so that the next roller 13 is moved to the aperture 23 and is replaced. By this stepwise rotation action, one roller after the other can be moved to the aperture 23, can be taken out of its pocket and can be replaced by a new roller 13.

After the last roller has been inserted, the aperture 23 needs to be closed again. For closing the aperture 23 the ring piece, which was cut out previously, can be used as a ring piece for closing the aperture 23. Before this ring piece is inserted in the aperture 23, the raceway part of this ring piece is worked in order to prepare a kind of ramp or chamfer geometry. This geometry allows to locally unload the respective roller which rolls over this geometry when the ring piece is inserted and the inner ring 6 is closed again. The roller is guided by this geometry out of contact to the outer raceway 4 of the outer ring 2, so that no load rests on this roller 13. The only load which rests on the inserted ring piece is the weight load of the roller 13 itself.

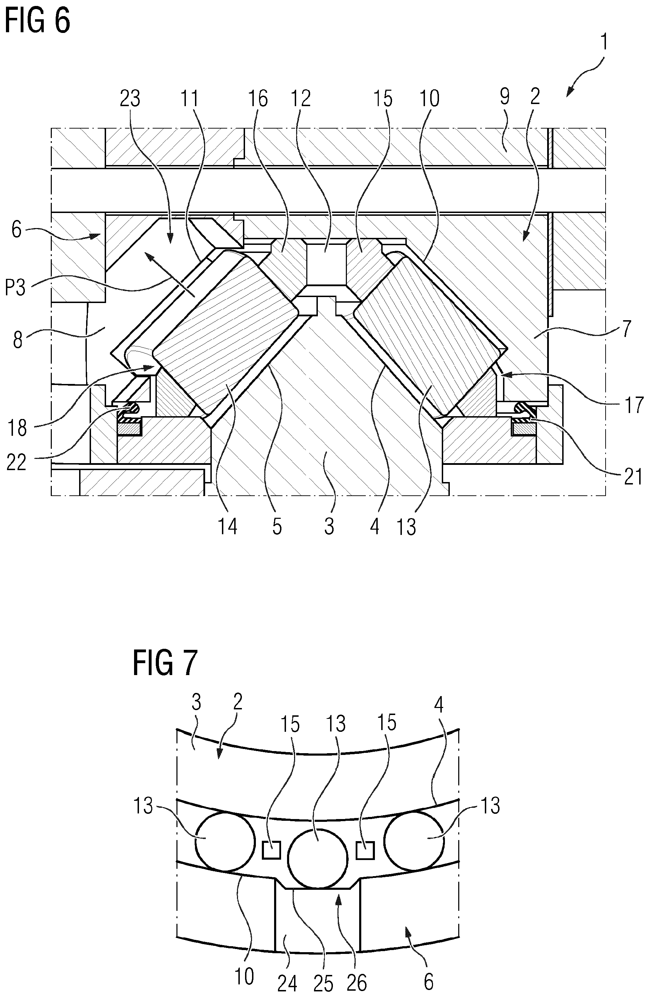

Fig. 7 shows a principal illustration of this process of unloading the single roller 13. It shows the outer ring 2 with its base 3 and the inner ring 6, into which a ring piece 24 has been inserted for closing the aperture 23. As fig. 7 shows, the ring piece 24 comprises a raceway part 25, which has a ramp geometry 26 guiding the respective rollers 13. Three of these rollers 13, arranged in the cage 15, are shown in fig. 7. The right and left roller 13 are loaded, they are in contact with both raceways 4 and 10. The middle roller 13 currently rolls over the raceway part 25 with the ramp geometry 26, which guides the roller 13 out of his contact with the outer raceway 4, as fig. 7 clearly shows. So, each roller 13 rolling from the load zone, where it has contact to both raceways 4, 10, on the ramp geometry 26 will be taken out of the load path, as it loses its contact to the raceway 4. When the rolling proceeds, the roller 13 again comes into contact with both raceways 4, 10 and is again fully loaded.

In an alternative to such ramp or chamfer geometry 26, the cut out ring piece 24 may be worked on the raceway part side, so that a separate raceway piece, for example made of the softer metal or alloy or of an elastic plastic material, is arranged at the ring piece 24. This separate raceway piece therefore provides an elasticity, which allows for the roller moving slightly out of its contact to the outer ring, thereby getting unloaded. Also, a ring piece made of the sufficiently soft metal or alloy, like brass, may be used, which has an inherent elasticity sufficient for unloading the roller as explained. Certainly, after the roller has passed the raceway part, it is again fully loaded, as it is again in contact with both inner and outer raceways.

Whatever ring piece 24 is finally used, the ring piece 24 is inserted in the aperture 23 for closing it. It is fixated to the inner ring 5 for example by welding or by using any other mechanical fixation means like brackets or bolts etc.

As mentioned, the respective aperture 23 is provided to the position, where the respective rollers are unloaded. Regarding the rollers 13, this position is the 12 o'clock position, as explained to figs. 1 to 3 and as shown in figs. 4, 5. When any of the rollers 14 shall be replaced, the respective aperture 23 is arranged at the 6 o'clock position at the other upwind side of the inner ring 6.

An embodiment of such an arrangement is shown in fig. 6. This embodiment is comparable to the embodiment of figs. 4 and 5, as also in this embodiment a larger aperture 23 is provided by cutting away the part of the shoulder 8 and of the side of the inner ring 6 comprising the raceway 11, so that the respective aperture 23 is provided somehow above the respective roller 14, as shown in fig. 6. Here, the respective roller 14 is taken out of its pocket 18 by lifting it through the aperture 23, as shown by the arrow P3. The new roller 14 is inserted by lowering it through the aperture 23 in his pocket 18.

Also on this bearing side, all rollers 14 may be replaced in the stepwise manner as previously described to figs. 4 and 5. So, also on this bearing side an on-site replacement without the need of any dismantling is possible.

Although the present invention has been described in detail with reference to the preferred embodiment, the present invention is not limited by the disclosed examples but by the appended claims.

## Claims

1. Method for repairing a roller main bearing (1) of a wind turbine, wherein the bearing (1) comprises an inner ring (6) having a U-shaped cross section, which inner ring (6) comprises two radial outward facing shoulders (7, 8) and two inner raceways (10, 11) in a V-arrangement, and outer ring (2) arranged concentrical with the inner ring (6) and engaging in the inner ring (6), which outer ring (2) comprises two inner raceways (4, 5) in a V-arrangement, and several rollers (13, 14) arranged in a space (12) between the inner and the outer ring (2, 6) rolling on the respective raceways (4, 5, 10, 11), comprising the steps:
- opening an aperture (23) providing access into the space (12) between both rings (2, 6) in which area the rollers (13, 14) are arranged,
- removing a roller (13, 14) through the aperture (23),
- closing the aperture (23) again,
**characterized in that** a seal carrier ring arrangement (19) which closes the space (12) comprising the rollers (13, 14) radially is completely removed or is locally opened for providing an opening which is at least a part of the aperture (23), wherein a part of a shoulder (7, 8) of the inner ring (6) is cut away for building an opening in the inner ring (6), which opening together with the opening in the seal carrier ring arrangement (19) is aperture (23).

2. Method according to claim 1, **characterized in that** a cage (15, 16) comprising pockets (17, 18) in each of which a roller (13, 14) is arranged is locally cut open for providing an opening to the pocket (17, 18) comprising the roller (13, 14).

3. Method according to claim 2, **characterized in that** the whole roller (13, 14) is removed through the aperture (23), wherein a new roller (13, 14) is inserted in the pocket (17, 18), or which pocket (17, 18) is left empty.

4. Method according to one of the preceding claims, **characterized in that**, after removing the roller (13, 14) or after inserting the new roller (13, 14), the cage (15, 16), if the method is according to claim 2 or 3, is closed by inserting and fixating an adapted cage piece into the cage opening, and that the shoulder (7, 8) of the inner ring (6) is closed by inserting an adapted shoulder piece into the shoulder opening.

5. Method for repairing a roller main bearing (1) of a wind turbine, wherein the bearing (1) comprises an inner ring (6) having a U-shaped cross section, which inner ring (6) comprises two radial outward facing shoulders (7, 8) and two inner raceways (10, 11) in a V-arrangement, and outer ring (2) arranged concentrical with the inner ring (6) and engaging in the inner ring (6), which outer ring (2) comprises two inner raceways (4, 5) in a V-arrangement, and several rollers (13, 14) arranged in a space (12) between the inner and the outer ring (2, 6) rolling on the respective raceways (4, 5, 10, 11), comprising the steps:
- opening an aperture (23) providing access into the space (12) between both rings (2, 6) in which area the rollers (13, 14) are arranged,
- removing a roller (13, 14) through the aperture (23),
- closing the aperture (23) again,
**characterized in that** a seal carrier ring arrangement (19) which closes the space (12) comprising the rollers (13, 14) radially is completely removed or is locally opened for providing an opening which is at least a part of the aperture (23), wherein the roller (13, 14) is cut into pieces by means of a cutting tool inserted into the space (12) comprising the rollers (13, 14) through the aperture built by removing the seal carrier ring arrangement or by removing a part of the seal carrier ring arrangement (19), which cut pieces are removed from the space (12) through the aperture (23).

6. Method for repairing a roller main bearing (1) of a wind turbine, wherein the bearing (1) comprises an inner ring (6) having a U-shaped cross section, which inner ring (6) comprises two radial outward facing shoulders (7, 8) and two inner raceways (10, 11) in a V-arrangement, and outer ring (2) arranged concentrical with the inner ring (6) and engaging in the inner ring (6), which outer ring (2) comprises two inner raceways (4, 5) in a V-arrangement, and several rollers (13, 14) arranged in a space (12) between the inner and the outer ring (2, 6) rolling on the respective raceways (4, 5, 10, 11), comprising the steps:
- opening an aperture (23) providing access into the space (12) between both rings (2, 6) in which area the rollers (13, 14) are arranged,
- removing a roller (13, 14) through the aperture (23),
- closing the aperture (23) again,
**characterized in that** the inner ring (6) is locally cut open for providing the aperture (23), which aperture (23) opens at least the inner raceway (10, 11) and is positioned relative to the roller (13, 14) and is dimensioned such that the roller (13, 14) can be moved through the aperture (23).

7. Method according to claim 6, **characterized in that** after removal of a roller (13, 14) from a pocket (17, 18) of a cage (15, 16) in which the roller (13, 14) is arranged, a new roller (13, 14) is inserted into the pocket (17, 18).

8. Method according to claim 7, **characterized in that** the outer ring (2) is rotated stepwise so that one roller (13, 14) after the other is rotated to the aperture (23) and is replaced by a new roller (13, 14).

9. Method according to claim 7 or 8, **characterized in that** each roller (13, 14) is moved out of and into the pocket (17, 18) by means of a lifting tool.

10. Method according to one of the claims 6 to 9,
**characterized in that** the aperture (23) is provided at a 12 o'clock position or at the 6 o'clock position, seen in the circumferential direction, for accessing the space (12) of the rollers (13, 14).

11. Method according to one of the claims 6 to 10,
**characterized in that** the aperture (23) is closed by inserting an adapted ring piece (24) which comprises a raceway part (25) completing the inner raceway (10, 11).

12. Method according to claim 11, **characterized in that** the raceway part (25) comprises means for taking the roller (13, 14), which rolls over the raceway part (25), out of the load path.

13. Method according to one of the preceding claims, **characterized in that** the space in the vicinity of an area, where a cutting process is performed either at the shoulder (7, 8) or the inner ring (6) or the cage (15, 16) or a damaged roller (13, 14), is filled with a protection material, which material is removed after the cutting process.

## Patentansprüche

1. Verfahren zur Reparatur eines Wälzhauptlagers (1) einer Windenergieanlage, wobei das Lager (1) einen Innenring (6) mit einem U-förmigen Querschnitt umfasst, wobei der Innenring (6) zwei radial nach außen weisende Schultern (7, 8) und zwei Innenlaufbahnen (10, 11) in V-Anordnung umfasst, und einen Außenring (2), der konzentrisch zum Innenring (6) angeordnet ist und in den Innenring (6) eingreift, wobei der Außenring (2) zwei Innenlaufbahnen (4, 5) in V-Anordnung umfasst, sowie mehrere Wälzkörper (13, 14), die in einem Raum (12) zwischen dem Innen- und dem Außenring (2, 6) angeordnet sind und auf den jeweiligen Laufbahnen (4, 5, 10, 11) abrollen, umfassend die folgenden Schritte:
- Öffnen einer Öffnung (23), die einen Zugang in den Raum (12) zwischen den beiden Ringen (2, 6) ermöglicht, in dem die Wälzkörper (13, 14) angeordnet sind,
- Entfernen eines Wälzkörpers (13, 14) durch die Öffnung (23),
- Wiederschließen der Öffnung (23),
**dadurch gekennzeichnet, dass** eine Dichtungsträgerringanordnung (19), die den Raum (12) mit den Wälzkörpern (13, 14) radial verschließt, vollständig entfernt oder lokal geöffnet wird, um eine Öffnung bereitzustellen, die zumindest ein Teil der Öffnung (23) ist, wobei ein Teil einer Schulter (7, 8) des Innenrings (6) weggeschnitten wird, um eine Öffnung in dem Innenring (6) zu bilden, die zusammen mit der Öffnung in der Dichtungsträgerringanordnung (19) die Öffnung (23) ist.

2. Verfahren nach Anspruch 1, **dadurch gekennzeichnet, dass** ein Käfig (15, 16) mit Taschen (17, 18), in denen jeweils ein Wälzkörper (13, 14) angeordnet ist, lokal aufgeschnitten wird, um eine Öffnung für die Tasche (17, 18) mit dem Wälzkörper (13, 14) bereitzustellen.

3. Verfahren nach Anspruch 2, **dadurch gekennzeichnet, dass** der gesamte Wälzkörper (13, 14) durch die Öffnung (23) entfernt wird, wobei ein neuer Wälzkörper (13, 14) in die Tasche (17, 18) eingesetzt wird oder die Tasche (17, 18) leer gelassen wird.

4. Verfahren nach einem der vorhergehenden Ansprüche, **dadurch gekennzeichnet, dass** nach dem Entfernen des Wälzkörpers (13, 14) oder nach dem Einsetzen des neuen Wälzkörpers (13, 14) der Käfig (15, 16), wenn das Verfahren nach Anspruch 2 oder 3 erfolgt, durch Einsetzen und Fixieren eines angepassten Käfigstücks in die Käfigöffnung geschlossen wird und dass die Schulter (7, 8) des Innenrings (6) durch Einsetzen eines angepassten Schulterstücks in die Schulteröffnung geschlossen wird.

5. Verfahren zur Reparatur eines Wälzhauptlagers (1) einer Windenergieanlage, wobei das Lager (1) einen Innenring (6) mit einem U-förmigen Querschnitt umfasst, wobei der Innenring (6) zwei radial nach außen weisende Schultern (7, 8) und zwei Innenlaufbahnen (10, 11) in V-Anordnung umfasst, und einen Außenring (2), der konzentrisch zum Innenring (6) angeordnet ist und in den Innenring (6) eingreift, wobei der Außenring (2) zwei Innenlaufbahnen (4, 5) in V-Anordnung umfasst, sowie mehrere Wälzkörper (13, 14), die in einem Raum (12) zwischen dem Innen- und dem Außenring (2, 6) angeordnet sind und auf den jeweiligen Laufbahnen (4, 5, 10, 11) abrollen, umfassend die folgenden Schritte:
- Öffnen einer Öffnung (23), die einen Zugang in den Raum (12) zwischen den beiden Ringen (2, 6) ermöglicht, in dem die Wälzkörper (13, 14) angeordnet sind,
- Entfernen eines Wälzkörpers (13, 14) durch die Öffnung (23),
- Wiederschließen der Öffnung (23),
**dadurch gekennzeichnet, dass** eine Dichtungsträgerringanordnung (19), die den Raum (12) mit den Wälzkörpern (13, 14) radial verschließt, vollständig entfernt oder lokal geöffnet wird, um eine Öffnung bereitzustellen, die zumindest ein Teil der Öffnung (23) ist,
wobei der Wälzkörper (13, 14) mittels eines Schneidwerkzeugs in Stücke geschnitten wird, das in den Raum (12) mit den Wälzkörpern (13, 14) durch die Öffnung eingeführt wird, die durch Entfernen der Dichtungsträgerringanordnung oder durch Entfernen eines Teils der Dichtungsträgerringanordnung (19) gebildet wird, wobei die abgeschnittenen Teile durch die Öffnung (23) aus dem Raum (12) entfernt werden.

6. Verfahren zur Reparatur eines Wälzhauptlagers (1) einer Windenergieanlage, wobei das Lager (1) einen Innenring (6) mit einem U-förmigen Querschnitt umfasst, wobei der Innenring (6) zwei radial nach außen weisende Schultern (7, 8) und zwei Innenlaufbahnen (10, 11) in V-Anordnung umfasst, und einen Außenring (2), der konzentrisch zum Innenring (6) angeordnet ist und in den Innenring (6) eingreift, wobei der Außenring (2) zwei Innenlaufbahnen (4, 5) in V-Anordnung umfasst, sowie mehrere Wälzkörper (13, 14), die in einem Raum (12) zwischen dem Innen- und dem Außenring (2, 6) angeordnet sind und auf den jeweiligen Laufbahnen (4, 5, 10, 11) abrollen, umfassend die folgenden Schritte:
- Öffnen einer Öffnung (23), die einen Zugang in den Raum (12) zwischen den beiden Ringen (2, 6) ermöglicht, in dem die Wälzkörper (13, 14) angeordnet sind,
- Entfernen eines Wälzkörpers (13, 14) durch die Öffnung (23),
- Wiederverschließen der Öffnung (23), **dadurch gekennzeichnet, dass** der Innenring (6) zum Bereitstellen der Öffnung (23) lokal aufgeschnitten ist, wobei die Öffnung (23) zumindest die Innenlaufbahn (10, 11) öffnet und relativ zum Wälzkörper (13, 14) positioniert und so bemessen ist, dass der Wälzkörper (13, 14) durch die Öffnung (23) bewegt werden kann.

7. Verfahren nach Anspruch 6, **dadurch gekennzeichnet, dass** nach dem Entfernen eines Wälzkörpers (13, 14) aus einer Tasche (17, 18) eines Käfigs (15, 16), in dem der Wälzkörper (13, 14) angeordnet ist, ein neuer Wälzkörper (13, 14) in die Tasche (17, 18) eingesetzt wird.

8. Verfahren nach Anspruch 7, **dadurch gekennzeichnet, dass** der Außenring (2) schrittweise gedreht wird, sodass ein Wälzkörper (13, 14) nach dem anderen in die Öffnung (23) gedreht und durch einen neuen Wälzkörper (13, 14) ersetzt wird.

9. Verfahren nach Anspruch 7 oder 8, **dadurch gekennzeichnet, dass** jeder Wälzkörper (13, 14) mittels eines Hubwerkzeugs aus der Tasche (17, 18) heraus und in diese hinein bewegt wird.

10. Verfahren nach einem der Ansprüche 6 bis 9, **dadurch gekennzeichnet, dass** die Öffnung (23) an einer 12-Uhr-Position oder an der 6-Uhr-Position in Umfangsrichtung gesehen zum Zugriff auf den Raum (12) der Wälzkörper (13, 14) vorgesehen ist.

11. Verfahren nach einem der Ansprüche 6 bis 10, **dadurch gekennzeichnet, dass** die Öffnung (23) durch Einsetzen eines angepassten Ringstücks (24) verschlossen wird, das ein die Innenlaufbahn (10, 11) vervollständigendes Laufbahnteil (25) umfasst.

12. Verfahren nach Anspruch 11, **dadurch gekennzeichnet, dass** das Laufbahnteil (25) Mittel zum Herausnehmen des über das Laufbahnteil (25) rollenden Wälzkörpers (13, 14) aus dem Lastweg umfasst.

13. Verfahren nach einem der vorhergehenden Ansprüche, **dadurch gekennzeichnet, dass** der Raum in der Nähe eines Bereichs, in dem entweder an der Schulter (7, 8) oder dem Innenring (6) oder dem Käfig (15, 16) oder einem beschädigten Wälzkörper (13, 14) ein Schneidvorgang durchgeführt wird, mit einem Schutzmaterial gefüllt wird, das nach dem Schneidvorgang entfernt wird.

## Revendications

1. Procédé de réparation d'un palier principal de roulement (1) d'une éolienne, dans lequel le palier (1) comprend une bague intérieure (6) présentant une section transversale en U, laquelle bague intérieure (6) comprend deux épaulements radiaux (7, 8) orientés vers l'extérieur et deux chemins de roulement intérieurs (10, 11) selon une disposition en V, et une bague extérieure (2) concentrique à la bague intérieure (6) et s'engageant dans la bague intérieure (6), laquelle bague extérieure (2) comprend deux chemins de roulement intérieurs (4, 5) selon une disposition en V, et plusieurs rouleaux (13, 14) disposés dans un espace (12) entre les bagues intérieure et extérieure (2, 6) roulant sur les chemins de roulement respectifs (4, 5, 10, 11), comprenant les étapes :
- ouvrir une brèche (23) donnant accès à l'espace (12) compris entre les deux bagues (2, 6) dans lequel espace les rouleaux (13, 14) sont disposés,
- retirer un rouleau (13, 14) à travers la brèche (23),
- refermer la brèche (23),
**caractérisé en ce qu'**un agencement de bagues porte-joints (19) qui ferme l'espace (12) comprenant les rouleaux (13, 14) radialement est complètement retiré ou est ouvert localement pour ménager une ouverture qui est au moins une partie de la brèche (23), dans lequel une partie d'un épaulement (7, 8) de la bague intérieure (6) est découpée pour créer une ouverture dans la bague intérieure (6), laquelle ouverture, avec l'ouverture dans l'agencement de bagues porte-joints (19), forme la brèche (23).

2. Procédé selon la revendication 1, **caractérisé en ce qu'**une cage (15, 16) comprenant des poches (17, 18) dans chacune desquelles est disposé un rouleau (13, 14) est découpée localement pour ménager une ouverture dans la poche (17, 18) comprenant le rouleau (13, 14).

3. Procédé selon la revendication 2, **caractérisé en ce que** le rouleau (13, 14) entier est retiré à travers la brèche (23), dans lequel un nouveau rouleau (13, 14) est inséré dans la poche (17, 18), ou laquelle des poches (17, 18) est laissée vide.

4. Procédé selon l'une des revendications précédentes, **caractérisé en ce que**, après le retrait du rouleau (13, 14) ou après l'insertion du nouveau rouleau (13, 14), la cage (15, 16), si le procédé est selon la revendication 2 ou 3, est fermée par insertion et fixation d'un morceau de cage adapté dans l'ouverture de cage, et **en ce que** l'épaulement (7, 8) de la bague intérieure (6) est fermé par insertion d'un morceau d'épaulement adapté dans l'ouverture d'épaulement.

5. Procédé de réparation d'un palier principal de roulement (1) d'une éolienne, dans lequel le palier (1) comprend une bague intérieure (6) présentant une section transversale en U, laquelle bague intérieure (6) comprend deux épaulements radiaux (7, 8) orientés vers l'extérieur et deux chemins de roulement intérieurs (10, 11) selon une disposition en V, et une bague extérieure (2) concentrique à la bague intérieure (6) et s'engageant dans la bague intérieure (6), laquelle bague extérieure (2) comprend deux chemins de roulement intérieurs (4, 5) selon une disposition en V, et plusieurs rouleaux (13, 14) disposés dans un espace (12) entre les bagues intérieure et extérieure (2, 6) roulant sur les chemins de roulement respectifs (4, 5, 10, 11), comprenant les étapes :
- ouvrir une brèche (23) donnant accès à l'espace (12) compris entre les deux bagues (2, 6) dans lequel espace les rouleaux (13, 14) sont disposés,
- retirer un rouleau (13, 14) à travers la brèche (23),
- refermer la brèche (23),
**caractérisé en ce qu'**un agencement de bagues porte-joints (19) qui ferme l'espace (12) comprenant les rouleaux (13, 14) radialement est complètement retiré ou est ouvert localement pour ménager une ouverture qui est au moins une partie de la brèche (23), dans lequel le rouleau (13, 14) est découpé en morceaux au moyen d'un outil de coupe inséré dans l'espace (12) comprenant les rouleaux (13, 14) à travers la brèche créée en retirant l'agencement de bagues porte-joints ou en retirant une partie de l'agencement de bagues porte-joints (19), lesquels morceaux découpés sont retirés de l'espace (12) à travers la brèche (23).

6. Procédé de réparation d'un palier principal de roulement (1) d'une éolienne, dans lequel le palier (1) comprend une bague intérieure (6) présentant une section transversale en U, laquelle bague intérieure (6) comprend deux épaulements radiaux (7, 8) orientés vers l'extérieur et deux chemins de roulement intérieurs (10, 11) selon une disposition en V, et une bague extérieure (2) concentrique à la bague intérieure (6) et s'engageant dans la bague intérieure (6), laquelle bague extérieure (2) comprend deux chemins de roulement intérieurs (4, 5) selon une disposition en V, et plusieurs rouleaux (13, 14) disposés dans un espace (12) entre les bagues intérieure et extérieure (2, 6) roulant sur les chemins de roulement respectifs (4, 5, 10, 11), comprenant les étapes :
- ouvrir une brèche (23) donnant accès à l'espace (12) compris entre les deux bagues (2, 6) dans lequel espace les rouleaux (13, 14) sont disposés,
- retirer un rouleau (13, 14) à travers la brèche (23),
- refermer la brèche (23),
**caractérisé en ce que** la bague intérieure (6) est perforée localement pour ménager la brèche (23), laquelle brèche (23) ouvre au moins le chemin de roulement intérieur (10, 11) et est positionnée par rapport au rouleau (13, 14) et est dimensionnée de telle sorte que le rouleau (13, 14) puisse être déplacé à travers la brèche (23).

7. Procédé selon la revendication 6, **caractérisé en ce que**, après le retrait d'un rouleau (13, 14) d'une poche (17, 18) d'une cage (15, 16) dans laquelle est disposé le rouleau (13, 14), un nouveau rouleau (13, 14) est inséré dans la poche (17, 18).

8. Procédé selon la revendication 7, **caractérisé en ce que** la bague extérieure (2) est tournée progressivement de sorte qu'un rouleau (13, 14) après l'autre est tourné jusqu'à la brèche (23) et est remplacé par un nouveau rouleau (13, 14).

9. Procédé selon la revendication 7 ou 8, **caractérisé en ce que** chaque rouleau (13, 14) est déplacé hors et dans la poche (17, 18) au moyen d'un outil de levage.

10. Procédé selon l'une des revendications 6 à 9, **caractérisé en ce que** la brèche (23) est ménagée à une position de 12 heures ou à une position de 6 heures, vue dans la direction circonférentielle, pour accéder à l'espace (12) des rouleaux (13, 14).

11. Procédé selon l'une des revendications 6 à 10, **caractérisé en ce que** la brèche (23) est fermée par insertion d'un morceau de bague adapté (24) qui comprend une partie de chemin de roulement (25) complétant le chemin de roulement intérieur (10, 11).

12. Procédé selon la revendication 11, **caractérisé en ce que** la partie de chemin de roulement (25) comprend un moyen pour sortir le rouleau (13, 14), qui roule sur la partie de chemin de roulement (25), hors du trajet de charge.

13. Procédé selon l'une des revendications précédentes, **caractérisé en ce que** l'espace au voisinage d'une zone, où un processus de coupe est effectué soit au niveau de l'épaulement (7, 8) soit au niveau de la bague intérieure (6) soit au niveau de la cage (15, 16) soit au niveau d'un rouleau endommagé (13, 14), est rempli d'un matériau de protection, lequel matériau est retiré après le processus de coupe.
